# EUROPÄISCHE PATENTANMELDUNG

(11) **EP 4 678 331 A2**
(43) Veröffentlichungstag der Anmeldung: **14.01.2026**
(21) Anmeldenummer: 25187771.8
(22) Anmeldetag: 07.07.2025
(51) Int. Cl.: B23Q 3/06, B23Q 16/00, B23Q 3/18

(54) **AUSRICHTEINRICHTUNG**

(30) Priorität: 11.07.2024 DE 102024119768
(71) Anmelder: HOMAG GmbH, 72296 Schopfloch (DE)
(72) Erfinder: Schmieder, Volker, 72116 Mössingen (DE)
(74) Vertreter: Hoffmann Eitle

(57) **Zusammenfassung**

Die Erfindung betrifft eine Ausrichteinrichtung zum ordnungsgemäßen Positionieren eines Werkstücks (2), insbesondere eines Werkstücks (2) aus Holz, Holzwerkstoffen, Kunststoffen oder dergleichen, umfassend eine Auflagefläche für das Werkstück (2) und ein erstes Anschlagselement (5), wobei das erste Anschlagselement (5) zumindest abschnittsweise an einer lateralen Oberfläche einer Kontur (2.1), insbesondere an einer Oberfläche einer bereits bearbeiteten Kontur (2.1), des Werkstücks (2) anliegt.

Durch die Ausrichteinrichtung ist es erstmalig möglich ein bereits vorkonturiertes Werkstück ordnungsgemäß zu positionieren und durch die Spannvorrichtung derart zu fixieren, dass eine ordnungsgemäße weitere Bearbeitung möglich ist**.**

## Beschreibung

Die Erfindung betrifft eine Ausrichteinrichtung zum ordnungsgemäßen Positionieren von Werkstücken nach dem Oberbegriff von Anspruch 1, sowie eine Spannvorrichtung zum Positionieren und Fixieren von Werkstücken und ein Verfahren zum Positionieren eines Werkstücks.

Zur Bearbeitung von Werkstücken, insbesondere Werkstücke aus Holz, Holzwerkstoffen, Kunststoffen oder dergleichen, müssen die Werkstücke für die Bearbeitung ausgerichtet und gegebenenfalls fixiert werden. Hierfür werden marktübliche Ausrichteinrichtungen in Form eines festen und ebenen Anschlags verwendet. Bei bereits vorkonturierten Werkstücken kann eine ordnungsgemäße Positionierung an einem festen und ebenen Anschlag nicht gewährleistet werden. Ebenso weisen marktübliche Spannvorrichtungen einen festen und ebenen Anschlag auf, um in der Spannvorrichtung ein Werkstück auszurichten und für eine Bearbeitung zu fixieren. Hierbei kann bei einem bereits an einer Seite konturierten Werkstück eine ordnungsgemäße Positionierung in der Spannvorrichtung nicht gewährleistet werden, womit eine ordnungsgemäße Fixierung nicht sichergestellt werden kann.

Es ist daher eine Aufgabe der vorliegenden Erfindung, eine verbesserte Ausrichteinrichtung, insbesondere eine Ausrichteinrichtung zum ordnungsgemäßen Positionieren von bereits teilweise konturierten Werkstücken bereitzustellen.

Diese Aufgabe wird durch den Gegenstand des unabhängigen Patentanspruchs gelöst. Bevorzugte Ausführungsformen sind Gegenstand der abhängigen Patentansprüche.

Eine weitere Aufgabe der vorliegenden Erfindung ist es, eine verbesserte Spannvorrichtung, insbesondere eine Spannvorrichtung zum ordnungsgemäßen Fixieren von bereits teilweise konturierten Werkstücken bereitzustellen.

Die weitere Aufgabe wird durch den Gegenstand des nebengeordneten Patentanspruch 12 gelöst. Bevorzugte Ausführungsformen sind Gegenstand der abhängigen Patentansprüche.

Eine dritte Aufgabe der vorliegenden Erfindung ist es, ein verbessertes oder zumindest ein alternatives Verfahren zum Positionieren von Werkstücken bereitzustellen. Insbesondere soll ein Verfahren vorgeschlagen werden, bei welchem Werkstücke mit einer bereits konturierten Oberfläche, für eine weitere Bearbeitung ordnungsgemäß ausgerichtet werden können.

Diese dritte Aufgabe wird durch das Verfahren des nebengeordneten Patentanspruch 19 gelöst. Bevorzugte Ausführungsformen sind Gegenstand der abhängigen Patentansprüche.

Grundidee der Erfindung ist demnach, eine Ausrichteinrichtung zum ordnungsgemäßen Positionieren eines Werkstücks bereitzustellen, umfassend eine Auflagefläche für das Werkstück und ein erstes Anschlagselement, wobei das erste Anschlagselement zumindest abschnittsweise an einer lateralen Oberfläche einer Kontur, insbesondere an einer Oberfläche einer bereits bearbeiteten Kontur des Werkstücks anliegt. Durch die Bereitstellung einer Ausrichteinrichtung kann eine ordnungsgemäße Positionierung eines Werkstücks für eine anschließende Bearbeitung, insbesondere einer zerspanenden Bearbeitung, realisiert werden. Eine ordnungsgemäße Positionierung ist bei einer Bearbeitung, insbesondere der zerspanenden Bearbeitung eines Werkstücks wichtig, da damit eine präzise Bearbeitung des Werkstücks sichergestellt werden kann.

Vorzugsweise ist das Werkstück aus Holz, Holzwerkstoffen, Kunststoffen oder dergleichen ausgebildet. Werkstücke aus Holz, Holzwerkstoffen, Kunststoffen weisen eine empfindliche Oberfläche auf. Hierbei ist es besonders wichtig, dass die Ausrichteinrichtung keine Beschädigungen an der Werkstückoberfläche verursacht. Bevorzugt weist die Ausrichteinrichtung ein Gleitelement, insbesondere ein austauschbares Gleitelement, oder eine Beschichtung auf. Das Gleitelement und/oder die Beschichtung bestehen vorzugsweise aus einem Kunststoff.

In einer besonders bevorzugten Ausgestaltung weist das Werkstück eine größere Längen- als Breiten- und Höhenerstreckung auf und wird bevorzugt als Kantel und/oder Rahmenteil für Fenster- und/oder Türrahmensysteme verwendet. Hierfür weist die Ausrichteinrichtung einen entsprechend ausgelegten Anlegebereich auf, um ein entsprechendes Werkstück positionieren zu können.

Gemäß einer bevorzugten Ausführungsform ist das erste Anschlagselement verlagerbar angeordnet, wobei das erste Anschlagselement eine Ruhe- und eine Arbeitsposition aufweist, wobei das erste Anschlagselement in der Arbeitsposition oberhalb der Ebene der Auflagefläche angeordnet ist.

Durch die Ausführung des ersten Anschlagselements als verlagerbares Anschlagselement kann das erste Anschlagselement in Abhängigkeit des zu bearbeitenden Werkstücks in eine Arbeitsposition verlagert werden. Hierdurch wird der Anwendungsbereich der ersten Spannvorrichtung erweitert. Damit kann ein Werkstück mit einer konturierten lateralen Oberfläche derart ausgerichtet werden, dass die Gefahr eines Verkippens oder Verrutschens des Werkstücks an der Ausrichteinrichtung zumindest reduziert wird. Hierdurch kann eine ordnungsgemäße Positionierung eines bereits konturierten Werkstücks sichergestellt werden. Vorzugsweise ist das erste Anschlagselement an einem Führungssystem translatorisch verlagerbar. Für die Verlagerung kann das Anschlagselement von einer Steuereinheit angesteuert werden. Durch die Steuereinheit kann eine gezielte Verlagerung des ersten Anschlagselements bereitgestellt werden.

Gemäß einer weiteren bevorzugten Ausführungsform ist die Ruheposition unterhalb der Ebene der Auflagefläche angeordnet, wobei eine Antriebseinheit zur Verlagerung des ersten Anschlagselements vorgesehen ist, wobei die Antriebseinheit zumindest teilweise unterhalb der Ebene der Auflagefläche angeordnet ist.

Durch die Anordnung der Ruheposition des ersten Anschlagselements und der Antriebseinheit unterhalb der Auflagefläche kann eine kompakt bauende Ausrichteinrichtung bereit gestellt werden.

Gemäß einer weiteren bevorzugten Ausführungsform weist das erste Anschlagselement einen Verlagerungsarm und einen am Verlagerungsarm angeordneten Anlegearm auf, wobei der Anlegearm an die Kontur des Werkstücks anlegbar ist.

Gemäß einer weiteren bevorzugten Ausführungsform ist der Anlegearm am Verlagerungsarm verlagerbar, wobei der Anlegearm entsprechend der Kontur des Werkstücks derart am Verlagerungsarm verlagerbar ist, dass der Anlegearm zumindest abschnittsweise an einer Oberfläche der Kontur des Werkstücks anliegt.

Indem das erste Anschlagselement zweiteilig als Verlagerungs- und Anlegearm ausgebildet ist, kann das erste Anschlagselement besonders gut an die Kontur der Oberfläche des Werkstücks angelegt werden. Zudem kann der Anlegearm vorzugsweise aus einem elastischen Material bestehen, insbesondere aus elastischen Kunststoff, womit sich der Anlegearm besonders gut an die Kontur der Oberfläche des Werkstücks anlegen kann. In einer besonders bevorzugten Ausgestaltung ist der Verlagerungsarm verlagerbar an der Auflagefläche ausgebildet. Hierdurch kann das erste Anschlagselement bei Bedarf an der Auflagefläche verlagert werden.

Vorzugsweise ist der Anlegearm in einer vertikal ausgerichteten Hochachse am Verlagerungsarm verlagerbar.

Gemäß einer weiteren bevorzugten Ausführungsform ist der Anlegearm austauschbar am Verlagerungsarm angeordnet, wobei eine Seite des austauschbaren Anlegearms eine Gegenkontur aufweist, wobei die Gegenkontur zumindest abschnittsweise wenigstens annähernd der Kontur des Werkstücks entspricht. Mit einem Austausch des Anlegearms kann auf einfache Weise der Anlagearm auf individuelle Konturen von Werkstücken angepasst werden.

Vorzugsweise ist der Anlegearm hierfür über eine Schraubverbindung oder ein Schnellverschlusssystem, insbesondere ein Klicksystem, mit dem Verlagerungsarm verbunden.

Gemäß einer weiteren bevorzugten Ausführungsform weist die Ausrichteinrichtung mindestens ein weiteres Anschlagselement auf, wobei das weitere Anschlagselement im Bereich des ersten Anschlagelements angeordnet ist und ebenfalls eine Ruheposition und eine Arbeitsposition aufweist, wobei das erste und das weitere Anschlagselement separat voneinander verlagerbar sind.

Durch die Bereitstellung eines weiteren, optional separat ansteuerbaren, Anschlagselements kann die Spannvorrichtung einfach auf individuelle Konturen des Werkstücks angepasst werden und/oder eine verbesserte Abstützung eines Werkstücks bereitgestellt werden.

Gemäß einer weiteren bevorzugten Ausführungsform sind das erste und/oder das weitere Anschlagselement derart verlagerbar, dass das erste Anschlagselement zumindest abschnittsweise an der Oberfläche einer ersten Kontur des Werkstück anlegbar ist und/oder dass das weitere Anschlagselement zumindest abschnittsweise an einer Oberfläche einer zweiten Kontur des Werkstücks anlegbar ist.

Hierdurch ist eine besonders gute Positionierung an den Oberflächen der Konturen des Werkstücks möglich, womit eine besonders gute Abstützung und/oder Positionierung des Werkstücks in der Ausrichteinrichtung erreicht wird.

Gemäß einer weiteren bevorzugten Ausführungsform besteht das erste und/oder ein weiteres Anschlagselement zumindest abschnittsweise aus einem elastischen Material, vorzugsweise einem elastischen Kunststoff, wobei die Ausrichteinrichtung ein Andrückelement aufweist, wobei das Andrückelement das Werkstück gegen das erste und/oder weitere Anschlagselement bewegt, wobei sich das elastische Material des ersten und/oder weiteren Anschlagselements an die Kontur des Werkstücks anpasst, wenn das Andrückelement das Werkstück gegen das erste und/oder weitere Anschlagselement bewegt.

Durch die Verwendung eines elastischen Materials für das erste und/oder weitere Anschlagselement legt sich das erste und/oder weitere Anschlagselement an die Kontur des Werkstücks an, womit eine Positionierung und/oder Abstützung des Werkstücks am ersten und/oder weiteren Anschlagselement der Ausrichteinrichtung realisierbar sind.

Gemäß einer weiteren bevorzugten Ausführungsform weist das elastischen Material einen Hohlraum auf, wobei der Hohlraum durch ein Fluid beaufschlagbar ist, wodurch das elastische Material derart verformbar ist, dass es sich wenigstens abschnittsweise an die Kontur des Werkstück anlegt. Durch die Beaufschlagung des elastischen Materials mit einem Fluid wird der Innendruck derart erhöht, dass das elastische Material sich verformt und infolgedessen besonders gut an die Kontur des Werkstücks anlegt. Damit kann eine besonders gute Positionierung und Abstützung am ersten und/oder weiteren Anschlagselement erreicht werden.

Vorzugsweise wird als Fluid Druckluft verwendet. Durch die Verwendung von Druckluft als Fluid kann sichergestellt werden, dass bei einer Leckage am elastischen Material das Werkstück durch das Fluid nicht mit dem Fluid kontaminiert oder verschmutzt wird.

Gemäß einer weiteren bevorzugten Ausführungsform ist die Ausrichteinrichtung Teil einer Spannvorrichtung, eines Manipulators und/oder eines Zuführtisches einer Bearbeitungsvorrichtung.

Hierdurch wird bereits ersichtlich, dass die Ausrichteinrichtung an einer oder mehreren verschiedenen Stellen einer Bearbeitungsvorrichtung angeordnet sein kann.

Die Erfindung betrifft ferner eine Spannvorrichtung zum Fixieren eines Werkstücks aufweisend mindestens eine erste Spannzange, wobei die Spannzange eine obere Spannbacke und eine untere Spannbacke umfasst, wobei die obere und untere Spannbacke derart zueinander verlagerbar sind, dass ein Werkstück zwischen der oberen und unteren Spannbacke für eine Bearbeitung, insbesondere eine spanende Bearbeitung, fixierbar ist, wobei die Spannvorrichtung ferner eine Ausrichteinrichtung zum Positionieren des Werkstücks in der Spannvorrichtung aufweist.

Durch die Bereitstellung einer erste Spannvorrichtung mit einer oberen und unteren Spannbacke kann eine sichere Fixierung eines Werkstücks zwischen den Spannbacken gewährleistet werden. Eine sichere Fixierung ist besonders wichtig bei zerspanenden Bearbeitungsvorgängen, da hierbei eine hohe Krafteinwirkung auf das Werkstück ausgeübt wird. Vorzugsweise ist die Ausrichteinrichtung nach einer der oben aufgeführten Ausgestaltungen ausgebildet.

Vorzugsweise ist das Werkstück aus Holz, Holzwerkstoffen, Kunststoffen oder dergleichen ausgebildet. Werkstücke aus Holz, Holzwerkstoffen, Kunststoffen weisen eine empfindliche Oberfläche auf. Hierbei ist es besonders wichtig, dass das Werkstück für eine spanende Bearbeitung sicher fixiert wird, wobei eine Beschädigung bzw. dauerhafte Verformung der Werkstückoberfläche durch Einwirkung der Spannbacken vermieden oder zumindest reduziert werden soll. Bevorzugt weisen die Spannbacken hierfür eine Kunststoffbeschichtung auf. Die Kunststoffbeschichtung kann hierbei als separates Bauteil an den Spannbacken, insbesondere auswechselbar an den Spannbacken angeordnet sein.

In einer besonders bevorzugten Ausgestaltung weist das Werkstück eine größere Längen- als Breiten- und/oder Höhenerstreckung auf und wird bevorzugt als Kantel und/oder Rahmenteil für Fenster- und/oder Türrahmensysteme verwendet. Hierfür weist die erste Spannvorrichtung einen entsprechend ausgelegten Bereich zwischen der oberen und/oder unteren Spannbacke auf, um ein entsprechendes Werkstück fixieren zu können.

Gemäß einer weiteren bevorzugten Ausführungsform ist das erste Anschlagselement im Bereich der Spannzange angeordnet. Durch die Anordnung des ersten Anschlagselements im Bereich der Spannzange kann eine kompakt aufbauende Spannzange bereit gestellt werden.

Vorzugsweise ist das erste Anschlagselement in der Draufsicht auf die Spannzange seitlich versetzt zur oberen und/oder unteren Spannbacke angeordnet.

Gemäß einer weiteren bevorzugten Ausführungsform weisen die untere und/oder obere Spannbacke eine Aussparung auf, wobei die Aussparung derart ausgestaltet ist, dass das erste Anschlagselement in der Aussparung oder durch die Aussparung in die Arbeitsposition verlagerbar ist.

Durch das Bereitstellen einer Aussparung in einer der Spannbacken kann die Integration des ersten Anschlagselements besonders kompakt gestaltet werden. Zudem kann durch die Integration des ersten Anschlagselements in eine der Spannbacken eine ordnungsgemäße Positionierung des Werkstücks für eine Fixierung in der Spannbacke gewährleistet werden. Vorzugsweise ist die Aussparung in Form einer Nut seitlich an der Spannbacke angeordnet und kann eine Führungskontur für das erste Anschlagselement aufweisen. Durch die Anordnung an einer Seite der Spannbacke ist im Falle einer notwendigen Wartung des ersten Anschlagselements oder der Führungskontur eine einfache Zugänglichkeit gewährleistet.

Die Erfindung betrifft ferner eine Bearbeitungsvorrichtung, insbesondere zum Bearbeiten von Werkstücke aus Holz, Holzwerkstoffen, Kunststoffen oder dergleichen, mit einem Zuführtisch, zumindest einer ersten Spannvorrichtung, einer Bearbeitungseinheit und einer Ausrichteinrichtung, wobei die erste Spannvorrichtung an einem verlagerbaren ersten Tisch angeordnet ist, wobei der erste Tisch für eine Bearbeitung eines Werkstücks relativ zur Bearbeitungseinheit verlagerbar ist.

Vorzugsweise ist die Ausrichteinrichtung nach einer der oben ausgeführten Ausgestaltungen ausgebildet.

Vorzugsweise ist die Spannvorrichtung nach einem der vorhergehend beschriebenen Ausführungsformen ausgebildet.

Vorzugsweise ist die Bearbeitungseinheit als eine spanende Bearbeitungseinheit ausgebildet.

Besonders bevorzugt weist die Bearbeitungseinheit eine Aufnahmeeinheit zum Aufnehmen eines auswechselbaren ersten Bearbeitungswerkzeugs und ein Magazin mit weiteren Bearbeitungswerkzeugen auf. Hierdurch kann eine Vielzahl von Bearbeitungswerkzeugen für die Bearbeitung von unterschiedlichen Konturen am Werkstück bereitgestellt werden.

Gemäß einer bevorzugten Ausführungsform weist die Bearbeitungsvorrichtung einen Manipulator auf, wobei die Ausrichteinrichtung am Zuführtisch angeordnet ist, wobei an der Ausrichteinrichtung ein Werkstück positionierbar ist, wobei der Manipulator das ausgerichtete Werkstück entnimmt und ausgerichtet in die erste Spannvorrichtung bewegt.

Durch die Verwendung eines Manipulators, welcher das Werkstück ausgerichtet in die erste Spannvorrichtung einführen kann, ist es möglich, die Ausrichteinrichtung des Werkstücks am Zuführtisch anzuordnen. Hiermit kann ein Werkstück auf dem Zuführtisch ausgerichtet werden, während ein weiteres Werkstück in die Spannvorrichtung eingeführt und gespannt wird.

Gemäß einer weiteren bevorzugten Ausführungsform weist die Bearbeitungsvorrichtung eine Sensoreinheit auf, wobei die Sensoreinheit die Längen-, Breiten- und/oder Höhenerstreckung eines auf dem Zuführtisch liegenden Werkstücks ermittelt und die ermittelten Werte einer Steuerungseinheit bereitstellt, wobei die Steuerungseinheit die Ausrichteinrichtung, den Manipulator und/oder die erste Spannvorrichtung ansteuert. Durch die Messung der Längen-, Breiten- und/oder Höhenerstreckung des Werkstücks können die Ausrichteinrichtung, der Manipulator und/oder die erste Spannvorrichtung derart angesteuert werden, dass auch bei besonders langen, breiten und/oder hohen Werkstücken eine ordnungsgemäße Positionierung, Manipulation und/oder Fixierung möglich ist.

Gemäß einer weiteren bevorzugten Ausführungsform weist die Bearbeitungsvorrichtung eine zweite Spannvorrichtung auf, wobei die zweite Spannvorrichtung an einem zweiten Tisch angeordnet ist, wobei der zweite Tisch relativ zur Bearbeitungseinheit und relativ zum ersten Tisch verlagerbar ist, wobei die Bearbeitungseinheit einen Bearbeitungsbereich aufweist, wobei der erste und/oder der zweite Tisch für eine Bearbeitung eines Werkstücks in den Bearbeitungsbereich verlagerbar ist, wobei ferner ein Werkstück von der ersten Spannvorrichtung zur zweiten Spannvorrichtung umspannbar ist, wobei die erste und zweite Spannvorrichtung für ein Umspannen in eine Umspannposition fahren, wobei die Umspannposition zumindest teilweise außerhalb des Bearbeitungsbereichs ist. Durch das Umspannen eines Werkstücks von der ersten Spannvorrichtung zu der zweiten Spannvorrichtung in einer Umspannposition zumindest teilweise außerhalb des Bearbeitungsbereichs kann der Bearbeitungsbereich für die Bearbeitung eines weiteren Werkstücks derart eingerichtet werden, dass ein Werkzeug zumindest abschnittsweise um das weitere Werkstück bewegt werden kann. Wobei der Bereich der Umspannposition derart gestaltet ist, dass die Tische der ersten und zweiten Spannvorrichtung für ein Umspannen im Bereich der Umspannposition positioniert werden können. Vorzugsweise weist die erste Spannvorrichtung und/oder die zweite Spannvorrichtung eine Schiebeeinheit auf, wobei die Schiebeeinheit beim Umspannen das Werkstück von der ersten Spannvorrichtung zur zweiten Spannvorrichtung verlagert.

Die Erfindung betrifft ferner ein Verfahren zum Fixieren eines Werkstücks in einer ersten Spannvorrichtung umfassend folgende Schritte, Einführen eines Werkstücks in die erste Spannvorrichtung und Fixieren des Werkstücks durch die erste Spannvorrichtung, wobei das Werkstück vor oder nach dem Einführen in einer Ausrichteinrichtung ausgerichtet wird. Vorzugsweise ist die erste Spannvorrichtung nach einem der vorhergehend beschriebenen Ausführungsformen ausgebildet. Vorzugsweise weist das Werkstück eine bearbeitete Seitenfläche mit einer Kontur auf.

Besonders bevorzugt wird das Werkstück an einem ersten Anschlagselement der Ausrichteinrichtung ausgerichtet, wobei die Ausrichteinrichtung ein Teil der ersten Spannvorrichtung ist. Insbesondere ist das erste Anschlagselement in der ersten Spannvorrichtung verlagerbar ausgebildet und kann von einer Ruheposition in eine Arbeitsposition verlagert werden, wobei in der Arbeitsposition das Werkstück am ersten Anschlagselement positionierbar ist.

In einer weiteren besonders bevorzugten Ausgestaltung wird das Werkstück durch zumindest eine obere und/oder untere Spannbacke einer ersten Spannzange der ersten Spannvorrichtung fixiert.

Durch die Positionierung des Werkstücks kann eine ordnungsgemäße Positionierung in der Spannvorrichtung für einen weiteren Bearbeitungsschritt sichergestellt werden.

Gemäß einer bevorzugten Ausführungsform weist die Ausrichteinrichtung ein verlagerbares und/oder austauschbares Anschlagselement auf, wobei das erste Anschlagselement Teil eines Zuführtisches einer Bearbeitungsmaschine und/oder Teil der ersten Spannvorrichtung ist.

Durch die Ausgestaltung der Ausrichteinrichtung als verlagerbares und/oder austauschbares Anschlagselement, kann die Ausrichteinrichtung auf die verschiedenen Werkstück-Geometrien angepasst werden, um eine ordnungsgemäße Positionierung bereitstellen zu können.

Gemäß einer weiteren bevorzugten Ausführungsform ist das erste Anschlagselement mit Hilfe einer Antriebseinheit von einer Ruheposition in eine Arbeitsposition verlagerbar, wobei eine Steuerungseinheit vorgesehen ist, wobei die Steuerungseinheit derart eingerichtet ist, die Antriebseinheit in Abhängigkeit einer Information des Werkstücks anzusteuern, wobei die Antriebseinheit von der Steuereinheit derart angesteuert wird, dass in Abhängigkeit der Informationen, insbesondere die Kontur der Oberfläche, des zu spannenden Werkstück, das erste Anschlagselement von der Ruheposition in eine Arbeitsposition derart verlagert wird, dass das erste Anschlagselement zumindest abschnittsweise an einer Oberfläche der Kontur des Werkstücks anliegt.

Durch das Verlagern eines ersten Anschlagselements in eine Arbeitsposition in welcher das erste Anschlagselement zumindest abschnittsweise an der Oberfläche der Kontur des Werkstücks anliegt, ist eine ordnungsgemäße Positionierung des Werkstücks am ersten Anschlagselement möglich. Zudem stützt das erste Anschlagselement das Werkstück an der Oberfläche der Kontur derart ab, dass das Werkstück in der erste Spannvorrichtung ordnungsgemäß fixiert werden kann.

Gemäß einer weiteren bevorzugten Ausführungsform ist mindestens ein weiteres Anschlagselement vorgesehen, wobei die Antriebseinheit derart von der Steuereinheit angesteuert wird, dass das erste und das weitere Anschlagselement von einer Ruheposition in eine Arbeitsposition verlagert werden, wobei das weitere Anschlagselement zumindest annähernd zeitgleich von einer Ruheposition in eine Arbeitsposition verlagert wird, wobei die Lage der Arbeitsposition des ersten Anschlagselements sich von der Lage der Arbeitsposition des weiteren Anschlagselements unterscheidet.

Durch die Verwendung eines weiteren Anschlagselements kann eine besonders gute Positionierung und/oder Abstützung des Werkstücks in der erste Spannvorrichtung bereitgestellt werden.

Vorzugsweise sind das erste und das weitere Anschlagselement direkt nebeneinander angeordnet. Hierdurch kann die Kontur des Werkstücks besonders gut nachgebildet werden. Ferner kann die erste Spannvorrichtung bei einer direkt nebeneinander angeordneten Positionierung der Anschlagselemente besonders kompakt gebaut werden.

Gemäß einer weiteren bevorzugten Ausführungsform erfolgt das Einführen mit Hilfe eines Manipulators, wobei der Manipulator ein Anschlagselement aufweist, wobei das Werkstück am Anschlagselement derart ausgerichtet wird, dass es ausgerichtet in die Spannvorrichtung eingeführt wird.

Durch die Integration der Ausrichteinrichtung in den Manipulator kann der Manipulator sowohl ein reines Manipulieren des Werkstücks durchführen als auch ein Werkstück positionieren und positioniert einer weiteren Bearbeitung, vorzugsweise einer ersten Spannvorrichtung, zuführen. Hierdurch wird die Flexibilität des Manipulators erhöht.

Besonders bevorzugt ist der Manipulator als Knickarmroboter ausgebildet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
Fig. 1 eine erfindungsgemäße erste Spannvorrichtung mit einem eingespannten Werkstück,
Fig. 2 ein Spannsystem aus einer ersten und einer zweiten erfindungsgemäßen Spannvorrichtung,
Fig. 3 eine Detailansicht der erfindungsgemäßen Spannvorrichtung,
Fig. 4 eine Detailansicht eines ersten Anschlagelements einer Ausrichteinrichtung,
Fig. 5a eine Detailansicht einer weiteren Ausgestaltung eines ersten Anschlagelements einer Ausrichteinrichtung,
Fig. 5b eine Detailansicht einer dritten Ausgestaltung eines ersten Anschlagelements einer Ausrichteinrichtung,
Fig. 6 eine Bearbeitungsvorrichtung aufweisend eine erfindungsgemäße Spannvorrichtung,
Fig. 7 ein Fließbildschema des erfindungsgemäßen Verfahrens zum Fixieren eines Werkstücks.

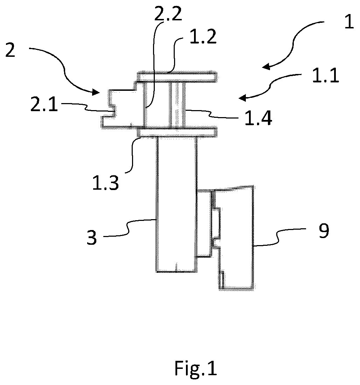

Die Fig. 1 illustriert eine erfindungsgemäße erste Spannvorrichtung 1. Die erste Spannvorrichtung 1 ist über einen ersten Tisch 3 an einer feststehenden Führungseinheit 9 verlagerbar angeordnet. Im vorliegenden Ausführungsbeispiel weist die Spannvorrichtung 1 eine erste Spannzange 1.1 mit einer oberen Spannbacke 1.2 und einer unteren Spannbacke 1.3 auf. Die obere Spannbacke 1.2 ist über ein erstes Spannbackenführungselement 1.4 in einer vertikal ausgerichteten Hochachse beweglich zur unteren Spannbacke 1.3 verlagerbar. Für die Verlagerung wird das Spannbackenführungselement 1.4 mit Hilfe einer nicht dargestellten Antriebseinheit ein- oder ausgefahren. Die obere und untere Spannbacke 1.2, 1.3 ragen vom Spannbackenführungselement 1.4 auf zwei sich gegenüberliegenden Seiten derart ab, dass eine Doppelspannzange gebildet wird. Durch die Ausbildung der Spannvorrichtung 1 als Doppelspannzange ist es möglich, dass zwei Werkstücke in den gegenüberliegenden Spannbacken 1.2, 1.3 gleichzeitig eingespannt werden können. Alternativ ist es möglich, dass mit Hilfe eines nicht dargestellten Manipulators ein Werkstück 2 von einer Seite der gegenüberliegenden Spannbacken 1.2, 1.3 zur anderen Seite der gegenüberliegenden Spannbacken 1.2, 1.3 umgespannt wird. Die untere Spannbacke 1.3 ist vorliegend mit dem ersten Tisch 3 verbunden. In einer nicht dargestellten Variante ist die untere Spannbacke in der Höhe verlagerbar zu einem ersten Tisch ausgebildet. Hierdurch kann ein in der Spannzange eingespanntes Werkstück für eine Bearbeitung senkrecht zum ersten Tisch in einer vertikal ausgerichteten Hochachse verlagert werden. In der Draufsicht auf die obere und untere Spannbacke überdecken sich die obere und untere Spannbacke zumindest abschnittsweise. In einer alternativen Variante können die obere und untere Spannbacke auch derart zueinander angeordnet sein, dass sich diese in Ihrer Draufsicht nicht überdecken. Bei einer derartigen Anordnung kann die obere Spannbacke zumindest auf das Höhenniveau der unteren Spannbacke abgesenkt werden. Mit dem Ausführungsbeispiel nach Fig.1 kann ein in der Spannzange 1.1 fixiertes Werkstück 2 von einem nicht gezeigten Werkzeug einer Bearbeitungsvorrichtung bearbeitet werden.

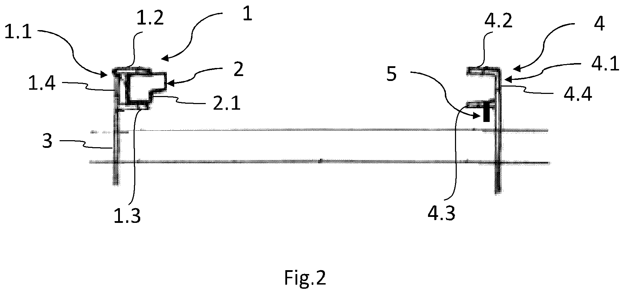

In Fig. 2 ist ein Spannsystem aus einer ersten Spannvorrichtung 1 und einer zweiten Spannvorrichtung 4 dargestellt. Die erste Spannvorrichtung 1 weist eine Spannzange 1.1 mit einer oberen Spannbacke 1.2 und einer unteren Spannbacke 1.3 auf. Die obere Spannbacke 1.2 ist zur unteren Spannbacke 1.3 relativ beweglich ausgebildet. Hierdurch kann der Abstand zwischen der oberen und unteren Spannbacke 1.2, 1.3 angepasst werden, um ein Werkstück 2 zwischen den beiden Spannbacken 1.2, 1.3 zu fixieren. Der Abstand zwischen der oberen und unteren Spannbacke 1.2, 1.3 kann in einer Variante angepasst werden, indem die obere Spannbacke 1.2 mittels eines ersten Spannbackenführungselements 1.4 translatorisch in der vertikal ausgerichteten Hochachse bewegt werden kann. In einer alternativen Variante kann zudem die untere Spannbacke 1.3 in der vertikal ausgerichteten Hochachse bewegt werden. Hierdurch wird die Flexibilität der Spannvorrichtung 1 erweitert. Die erste Spannvorrichtung 1 weist einen ersten Tisch 3 auf, welcher in zumindest einer Raumrichtung, vorzugsweise allen drei Raumrichtungen, verlagerbar, insbesondere an einer Führung verlagerbar, ist. Die zweite Spannvorrichtung 4 weist eine zweite Spannzange 4.1 mit einer zweiten oberen Spannbacke 4.2 und einer zweiten unteren Spannbacke 4.3 auf. Die zweite obere Spannbacke 4.2 ist relativ zur zweiten unteren Spannbacke 4.3 in der vertikal ausgerichteten Hochachse Höhenlage derart verlagerbar, dass ein Werkstück 2 zwischen den beiden Spannbacken fixiert werden kann. Die zweite Spannzange 4.1 weist zudem ein erstes Anschlagselement 5 auf. Das erste Anschlagselement 5 ist zwischen einer Arbeitsposition und einer Ruheposition verlagerbar, wobei die Arbeitsposition zwischen den Auflageflächen der unteren und oberen Spannbacken 1.2, 1.3 angeordnet ist.

Im Ausführungsbeispiel nach Fig.2 ist das erste Anschlagselement 5 in einer Ruheposition dargestellt, in welcher das erste Anschlagselement 5 auf gleicher Ebene oder unterhalb der Auflagefläche der zweiten unteren Spannbacke 4.3 angeordnet ist. Für die Verlagerung des ersten Anschlagselements 5 weist die zweite untere Spannbacke 4.3 eine Aussparung auf. Die Aussparung der zweiten unteren Spannbacke 4.3 ist derart gestaltet, dass das erste Anschlagselement 5 von einer Ruheposition in die Arbeitsposition verlagert werden kann. Hierfür ist in einer Variante die Aussparung als Nut ausgebildet. Die Nut ist in dieser Variante an einer der beiden lateralen Seitenfläche der zweiten unteren Spannbacke 4.3 angeordnet. Hierbei kann das Anschlagselement entlang der Nut von einer Ruheposition in die Arbeitsposition verlagert werden. In einer alternativen Ausgestaltung ist die Aussparung derart in der Auflagefläche der zweiten unteren Spannbacke angeordnet, dass das Anschlagselement von einer Ruheposition in die Arbeitsposition durch die Aussparung hindurch verlagert werden kann. Für die Verlagerung weist die zweite Spannvorrichtung 4 eine nicht dargestellte Antriebseinheit auf. In einer Variante ist die Antriebseinheit unterhalb der Ebene der Auflagefläche der zweiten unteren Spannbacke 4.3 angeordnet, womit eine besonders kompakt bauende Spannvorrichtung bereitgestellt werden kann. Vorzugsweise ist die Antriebseinheit als Elektromotor ausgebildet. Hiermit lässt sich das erste Anschlagselement 5 besonders präzise ansteuern und zwischen der zweiten oberen und unteren Spannbacke 4.2, 4.3 positionieren.

In einer alternativen nicht dargestellten Ausgestaltung ist das erste Anschlagselement im Bereich der zweiten oberen Spannbacke angeordnet. Für eine Verlagerung des ersten Anschlagselements weist die zweite obere Spannbacke eine Aussparung, beispielsweise in Form einer Nut seitlich einer der beiden lateralen Seitenflächen der zweiten oberen Spannbacke auf, durch welche das erste Anschlagselement hindurch verlagert werden kann.

In einer weiteren nicht dargestellten Ausgestaltung kann das erste Anschlagelement benachbart zur zweiten oberen oder unteren Spannbacke angeordnet sein. Hierbei weist die zweite obere oder untere Spannbacke eine nicht dargestellte Führungskontur für das erste Anschlagselement auf.

In einer weiteren nicht dargestellten Ausgestaltung sind ein erstes und zumindest ein weiteres Anschlagelement an der zweiten unteren und/oder oberen Spannbacke angeordnet. Das erste Anschlagselement ist von dem zumindest einen weiteren Anschlagselement unabhängig ansteuer- und positionierbar. Hierdurch können die Anschlage besonders gut an die Kontur eines Werkstücks angepasst werden.

Das Spannsystem nach Fig.2 ist zudem dafür geeignet ein Werkstück 2 in der ersten Spannvorrichtung 1 für eine erste Bearbeitung zu fixieren. Nach der ersten Bearbeitung des Werkstücks 2 weist die Oberfläche des Werkstücks eine Kontur 2.1 auf. Die Kontur 2.1 kann beispielsweise eine Nut sein, welche durch eine spanabhebende Bearbeitung erzeugt wurde. Anschließend kann das zumindest einseitig konturierte Werkstück 2 von der ersten Spannvorrichtung 1 zur zweiten Spannvorrichtung 4 übergeben werden. Hierfür werden die beiden Spannvorrichtungen 1, 4 derart zueinander positioniert, dass das Werkstück 2 in die zweiten Spannvorrichtung 4 eingeführt werden kann. Anschließend wird das Werkstück in der zweiten Spannvorrichtung 4 ausgerichtet, wobei hierfür das erste Anschlagelement derart ausgefahren wird, dass das erste Anschlagelement zumindest teilweise an der Oberfläche der Kontur 2.1 des Werkstücks anliegt. In einem weiteren Schritt werden die obere und/oder untere Spannbacke 4.2, 4.3 derart zueinander bewegt, dass das Werkstück zwischen den beiden Spannbacken 4.2, 4.3 fixiert wird, wobei die erste Spannvorrichtung 1 das Werkstück 2 während einer der Schritte Einführen, Positionieren oder Fixieren des Werkstücks 2 in der zweiten Spannvorrichtung 4 freigibt.

Es versteht sich, dass die erste Spannvorrichtung 1 des Spannsystems nach Fig. 2 in einer nicht dargestellten Variante die Merkmale der zweiten Spannvorrichtung aufweisen kann. Hierdurch wird ein besonders flexibles Spannsystem bereit gestellt, da auch die erste Spannvorrichtung ein bereits konturiertes Werkstück sicher positionieren und fixieren kann.

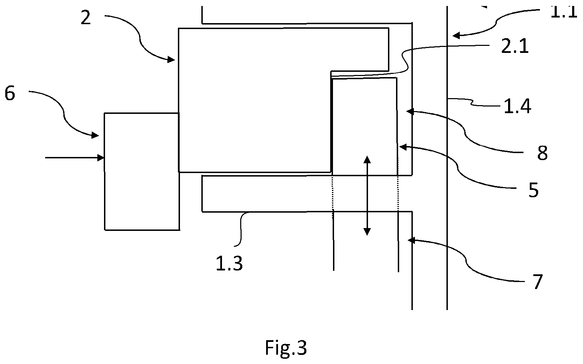

In Fig.3 ist eine Detailansicht der erfindungsgemäßen ersten Spannvorrichtung 1 dargestellt. Die erste Spannvorrichtung 1 weist eine erste Spannzange 1.1 mit einer oberen und unteren Spannbacke 1.2, 1.3 auf, wobei die Spannbacken 1.2, 1.3 zueinander relativ beweglich sind. In der in Fig.3 dargestellten Ausgestaltung ist die obere Spannbacke 1.2 an einem ersten Spannbackenführungselement 1.4 beweglich gelagert. In einer alternativen Ausgestaltung ist die obere Spannbacke fest mit dem ersten Spannbackenführungselement verbunden, wobei die obere Spannbacke mit dem ersten Spannbackenführungselement zusammen verlagert wird. Die Spannvorrichtung 1 weist zudem ein erstes Anschlagselement 5 auf, welches zwischen einer Ruheposition 7 und einer Arbeitsposition 8 verlagert werden kann. Die Verlagerung des ersten Anschlagselements 5 kann mit Hilfe einer nicht dargestellten Antriebseinheit, vorzugsweise einem Elektromotor, erfolgen. Die Antriebseinheit ist hierbei vorzugsweise unterhalb der Ebene der unteren Spannbacke angeordnet. Nach dem Ausführungsbeispiel von Fig.3 wird das erste Anschlagselement 5 im Bereich der unteren Spannbacke 1.3, vorzugsweise durch eine Aussparung in der unteren Spannbacke 1.3, von der Ruheposition 7 in die Arbeitsposition 8 verlagert. In der Arbeitsposition 8 ist das erste Anschlagselement 5 zwischen der oberen und unteren Spannbacke 1.3, 1.4 angeordnet und je nach Kontur 2.1 des Werkstücks 2 individuell einstellbar. Hierfür wird die Antriebseinheit des ersten Anschlagselements 5 von einer nicht gezeigten Steuereinheit in Abhängigkeit der Kontur 2.1 des Werkstücks 2 angesteuert. In einer bevorzugten Ausgestaltung kann ein Sensor an der ersten Spannvorrichtung 1 oder der Antriebseinheit des ersten Anschlagselements 5 vorgesehen sein. Der Sensor ist vorzugsweise als Kraftmesser ausgestaltet und in oder an der Antriebseinheit angeordnet. Hierdurch kann überprüft werden, mit welcher Kraft das erste Anschlagselement 5 gegen das Werkstück 2 gedrückt wird. Hiermit kann sichergestellt werden, dass das erste Anschlagselement 5 am Werkstück 2 ordnungsgemäß anliegt.

Ferner weist das Ausführungsbeispiel nach Fig.3 ein Andrückelement 6 auf. Das Andrückelement 6 kann ein Bestandteil der ersten Spannvorrichtung 1 oder einer weiteren Vorrichtung, beispielsweise einer Zuführvorrichtung, sein. Im Falle, dass das Andrückelement 6 Bestandteil der ersten Spannvorrichtung 1 ist, ist das Andrückelement über eine nicht dargestellte Schwenkapparatur nach unten und/oder oben schwenkbar. Das Andrückelement 6 weist daher einen Arbeitsbereich und einen nicht dargestellten Ruhebereich auf. Wenn sich das Andrückelement 6 im Ruhebereich befindet, kann das Werkstück 2 in die erste Spannzange 1.1 eingeführt werden. Das Andrückelement 6 wird nach einem Einführen des Werkstücks 2 in die Spannzange 1.1 in den Arbeitsbereich geschwenkt, um anschließend das Werkstück 2 bis zu einer vordefinierten Position in der ersten Spannzange 1.1 zu bewegen. Im Fall, dass das Andrückelement 6 Bestandteil der Zuführvorrichtung ist, wird die Spannvorrichtung 1 derart zur Zuführvorrichtung positioniert, dass das Werkstück von der Zuführvorrichtung mit Hilfe des Andrückelements 6 in die Spannvorrichtung 1 bewegt werden kann. Hierfür sind die obere und/oder untere Spannbacke 1.2, 1.3 zumindest so weit auseinander gefahren, dass der Raum zwischen den beiden Spannbacken 1.2, 1.3 größer ist als das einzuführende Werkstück 2.

Die Auflagefläche der obere und/oder untere Spannbacke 1.2, 1.3 weisen in einer Variante eine Kunststoffbeschichtung auf. Die Kunststoffbeschichtung kann als austauschbares Bauteil gestaltet sein und mit den Spannbacken verbunden, vorzugsweise verschraubt, werden. Durch die Bereitstellung einer Kunststoffbeschichtung kann sichergestellt werden, dass das Werkstück beim Einführen und Fixieren in der Spannzange 1.1 nicht beschädigt oder deformiert wird.

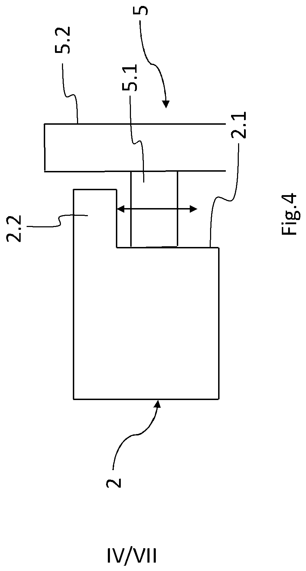

In Fig.4 ist eine Detailansicht eines ersten Anschlagelements 5 einer Ausrichteinrichtung schematisch dargestellt. Das erste Anschlagselement 5 weist einen Anlegearm 5.1 und einen Verlagerungsarm 5.2 auf. Der Anlegearm 5.1 kann am Verlagerungsarm 5.2 entlang verlagert werden. Die Verlagerung kann in einer Variante manuell durch einen Werker erfolgen. Hierfür weist der Verlagerungsarm 5.2 eine Nut auf, in welcher der Anlegearm 5.1 geführt sein kann. Die Nut weist Rastelemente auf, so dass der Anlegearm 5.1 in der vom Werker eingestellten Position gehalten wird. In einer alternativen Variante kann der Anlegearm 5.1 in der Nut mit einem Feststellelement, beispielsweise einer Feststellschraube, in der gewünschten Position gehalten werden.

Die Verlagerung des Anlegearms 5.1 am Verlagerungsarm 5.2 kann in einer weiteren Variante automatisch erfolgen. Hierfür ist dem Anlegearm 5.1 eine nicht dargestellte Antriebseinheit, vorzugsweise ein Elektromotor, zugeordnet, wobei die Antriebseinheit den Anlegearm 5.1 entlang des Verlagerungsarms 5.2 positionieren kann. Die Antriebseinheit wird vorzugsweise durch eine nicht dargestellte Steuereinheit angesteuert, wobei die Steuereinheit einen Bearbeitungsplan für das jeweilige Werkstück aufweist. Der Bearbeitungsplan weist die einzelnen Bearbeitungsschritte und die entsprechenden Konturen 2.1 des zu bearbeitenden Werkstücks vor und nach den jeweiligen Bearbeitungsschritten auf. Hierdurch kann die Steuereinheit bei einem bereits vorkonturiertes Werkstück 2 den Anlegearm 5.1 am Verlagerungsarm 5.2 derart positionieren, dass der Anlegearm 5.1 an der Oberfläche einer Kontur 2.1 des Werkstücks 2 anliegt. In einer alternativen Variante weist die Antriebseinheit einen Sensor, insbesondere einen Kraft- oder Drehzahlsensor, auf, wobei der Anlegearm 5.1 am Verlagerungsarm 5.2 mit Hilfe der Antriebseinheit so lange verlagert wird, bis der Anlegearm 5.1 an der Oberfläche einer Kontur 2.1 des Werkstücks 2 anliegt. Wenn der Anlegearm 5.1 an der Oberfläche der Kontur 2.1 des Werkstücks 2 in Kontakt tritt, registriert der Sensor eine Änderung in Form eines Kraftanstiegs und/oder einer Drehzahlerhöhung. Aufgrund des Sensorsignals kann über die Steuereinheit die Verlagerung des Anlegearms 5.1 verlangsamt oder gestoppt werden. Hierdurch kann sichergestellt werden, dass der Anlegearm 5.1 ordnungsgemäß am Werkstück 2 anliegt, wobei die Gefahr einer Beschädigung des Werkstücks 2 zumindest reduziert wird.

Im vorliegenden Ausführungsbeispiel gemäß Fig. 4 weist das Werkstück 2 eine Kontur 2.1 in Form einer rechteckigen Ausnehmung auf, wobei das Werkstück einen Fortsatz 2.2 aufweist, welcher in Richtung des ersten Anschlagselements 5 ragt. Der Anlegearm 5.1 wird vorliegend entlang des Verlagerungsarms 5.2 zu einer Oberfläche des Fortsatzes 2.2 des Werkstücks 2 bewegt, bis der Anlegearm 5.1 an der Oberfläche des Fortsatzes 2.2 des Werkstücks 2 anliegt und das Werkstück 2 daran positioniert.

Der Anlegearm 5.1 kann in den vorliegenden Ausführungsbeispielen ferner vom Verlagerungsarm 5.2 entfernt werden. Hierfür weist der Anlegearm 5.1 eine nicht gezeigte Kopplungseinheit auf. Hierdurch kann der Anlegearm 5.1 für eine Wartung oder im Verschleißfall ausgetauscht werden. Zudem können auch speziell geformte Anlegearme 5.1 am Verlagerungsarm 5.2 des ersten Anschlagselements 5 eingesetzt werden, wenn die Kontur 2.1 des Werkstücks 2 dies erfordert. Damit kann ein Anlegearm 5.1 ausgewählt werden, der an die Kontur 2.1 des Werkstücks 2 angepasst ist, womit eine gute Druckverteilung zwischen Anlegearm 5.1 und Oberfläche der Kontur 2.1 des Werkstücks 2 erfolgt. Hierdurch kann eine ordnungsgemäße Fixierung auch bei aufwendigen und/oder komplizierten Konturen 2.1 eines Werkstücks 2 gewährleistet werden. Zudem erhöht der Austausch des Anlegearms 5.1 die Flexibilität der Ausrichteinrichtung. Die Ausrichteinrichtung nach dem Ausführungsbeispiel gemäß Fig.4 kann Bestandteil eines Zuführtisches, eines Manipulators und/oder einer ersten oder weiteren Spannvorrichtung sein.

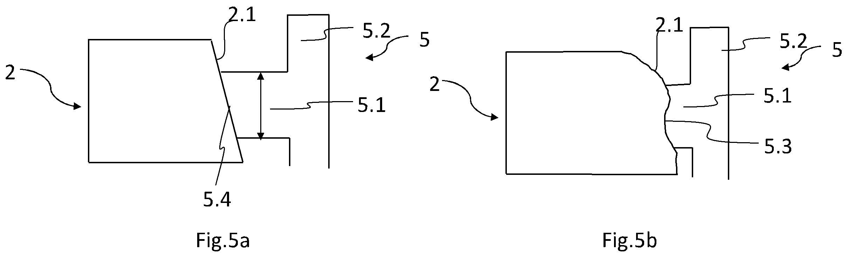

In Fig. 5a ist eine Detailansicht einer weiteren Ausgestaltung eines ersten Anschlagelements 5 einer Ausrichteinrichtung dargestellt. Das Anschlagselement 5 weist in dieser Ausgestaltung einen Verlagerungsarm 5.2 und einen Anlegearm 5.1 auf, wobei der Anlegearm 5.1 wie im Ausführungsbeispiel nach Fig. 4 am Verlagerungsarm 5.2 verlagert werden kann. Der Anlegearm 5.1 weist im Ausführungsbeispiel nach Fig. 5a eine viereckige Ausgestaltung auf, wobei eine erste zum Werkstück ragende Längenseite des Anlegearms 5.1 länger gestaltet ist als eine zweite zum Werkstück ragende Längenseite. Hierdurch weist der Anlegearm 5.1 eine Anlegefläche 5.4 auf, welche in einem Winkel ungleich 90° zu einer der beiden Längsseiten gestaltet ist. Durch die in einem Winkel ungleich 90° ausgerichtete Anlegefläche 5.4 können entsprechend winkelig geformte Konturen 2.1 eines Werkstücks 2 besonders gut abgestützt werden. Für die Abstützung wird der Anlegearm 5.1 derart am Verlagerungsarm 5.2 manuell oder automatisch verlagert, bis die Anlegefläche 5.4 zumindest teilweise an der Kontur 2.1 des Werkstücks 2 anliegt. Hierdurch kann auch bei nicht rechtwinkligen Konturen 2.1 der Werkstücke 2 eine ordnungsgemäße Abstützung gewährleistet werden.

Der Anlegearm 5.1 kann je nach Anwendungsfall vom Verlagerungsarm 5.2 entfernt und gegen einen weiteren Anlegearm, welcher eine andere Kontur der Anlegefläche aufweist, ausgetauscht werden. Für den Fall, dass die vorliegende Ausrichteinrichtung in eine erste Spannvorrichtung integriert ist, kann im Bereich der Spannzangen oder in einem Wartungsbereich für die Spannzangen ein Lager, vorzugsweise in Form eines Magazins, aufweisend eine Mehrzahl von Anlegearmen mit unterschiedlich ausgestalteten Anlegeflächen, vorgesehen sein.

In Fig. 5b ist eine Detailansicht einer dritten Ausgestaltung eines ersten Anschlagselements 5 einer Ausrichteinrichtung dargestellt. Das erste Anschlagselement 5 weist einen Anlegearm 5.1 auf, welcher an einem Verlagerungsarm 5.2 entsprechend der vorherigen Ausführungsbeispiele beweglich gelagert ist. Der Anlegearm 5.1 ist zumindest teilweise aus einem elastischen Material 5.3 gestaltet oder zumindest teilweise mit einem elastischen Material 5.3 beschichtet. Das elastische Material 5.3 ist vorzugsweise ein elastischer Kunststoff. Das elastische Material 5.3 ist derart gestaltet, dass es sich an eine Kontur 2.1 eines Werkstücks 2 anlegt. Hierbei bildet das elastische Material 5.3 eine Gegenkontur zur entsprechend der Kontur 2.1 des Werkstücks 2 aus, wenn das Werkstück 2 gegen den Anlegearm 5.1 bewegt wird. In einer Variante wird das Werkstück 2 mit Hilfe eines nicht dargestellten Andrückelements gegen das Werkstück gedrückt. Das Andrückelement kann mit Hilfe einer Steuereinheit angesteuert werden. Hierdurch kann die Kraft mit welcher das Werkstück 2 gegen den Anlegearm 5.1 bewegt wird, eingestellt werden. Durch das elastische Material 5.3 wird eine besonders große Abstützfläche der Werkstückoberfläche zur Oberfläche des Anlegearms 5.1 bereitgestellt. Durch die besonders große Abstützfläche kann eine besonders gute Abstützung innerhalb einer Spannzange für besonders kompliziert ausgebildete Konturen 2.1 eines Werkstücks 2 bereitgestellt werden.

Durch die Verwendung eines elastischen Materials 5.3 am Anlegearm 5.1 kann dieser mehrmals zum Abstützen von Werkstücken mit komplizierte ausgebildete Konturen verwendet werden.

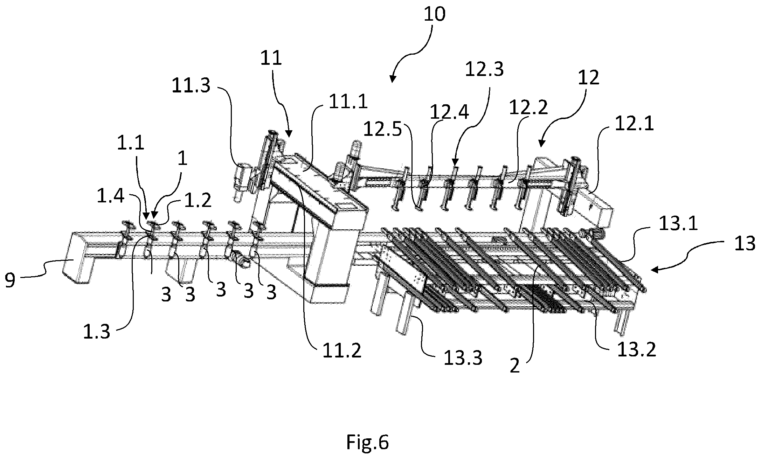

In Fig. 6 ist eine Bearbeitungsvorrichtung 10 dargestellt. Die Bearbeitungsvorrichtung 10 weist einen Zuführtisch 13, einen Manipulator 12, eine Bearbeitungseinheit 11 und eine feststehende Führungseinheit 9 auf.

Der Zuführtisch 13 weist im vorliegenden Ausführungsbeispiel eine erste Auflagefläche 13.1 und eine zweite Auflagefläche 13.2 auf. Die beiden Auflageflächen sind über einen Tragrahmen 13.3 miteinander verbunden. Die erste Auflagefläche 13.1 weist eine Mehrzahl von zu bearbeitenden Werkstücken 2 auf. Die zweite Auflagefläche 13.2 kann als Puffereinrichtung für weitere zu bearbeitende Werkstücke dienen. In einer alternativen Variante kann die zweite Auflagefläche 13.2 als Puffereinrichtung für bereits bearbeitete Werkstücke dienen, um diese entweder einer weiteren Bearbeitung zuzuführen oder an eine weitere Bearbeitungsvorrichtung zu transportieren. Der Zuführtisch 13 ist seitlich an der feststehenden Führungseinheit 9 angeordnet und derart eingerichtet, ein Werkstück 2 dem Manipulator 12 der Bearbeitungsvorrichtung 10 bereitzustellen und/oder zuzuführen.

An der feststehenden Führungseinheit 9 ist mindestens ein erster Tisch 3 mit einer ersten Spannvorrichtung 1 vorgesehen. Im vorliegenden Ausführungsbeispiel nach Fig. 6 sind eine Mehrzahl von ersten Tischen 3 mit jeweils einer ersten Spannvorrichtung 1 vorgesehen. Die erste Spannvorrichtung 1 weist eine erste Spannzange 1.1 mit einer oberen Spannbacke 1.2, einer unteren Spannbacke 1.3 und einem ersten Spannbackenführungselement 1.4 auf. Die erste Spannzange 1.1 des ersten Tisches 3 ist derart eingerichtet, ein Werkstück 2 für eine Bearbeitung mit einem Werkzeug 11.3 zu fixieren. Ferner ist der erste Tisch 3 derart verlagerbar an der feststehenden Führungseinheit 9 angeordnet, dass während einer Bearbeitung des Werkstücks 2 mit einem Werkzeug 11.3 das Werkstück 2 entlang dem Werkzeug 11.3 bewegt werden kann. In einer alternativen nicht dargestellten Variante wird das Werkzeug entlang des Werkstücks für eine Bearbeitung des Werkstücks bewegt.

Die Bearbeitungseinheit 11 ist in Form eines Bearbeitungsportals 11.1 ausgebildet. Am Bearbeitungsportal 11.1 ist eine Werkzeugführung 11.2 in Form eines Schienensystems angeordnet. An dem Schienensystem ist ein Werkzeug 11.3 verlagerbar und für eine Bearbeitung feststellbar angeordnet. Das Werkzeug 11.3 ist im vorliegenden Ausführungsbeispiel als Fräskopf ausgebildet, um eine Seite eines Werkstücks 2 zerspanend zu bearbeiten. In einer Variante ist der Bearbeitungseinheit ein nicht dargestelltes Werkzeugmagazin zugeordnet. Das Werkzeugmagazin weist eine Mehrzahl von Werkzeugen auf und ist derart eingerichtet, dass ein automatischer oder zumindest teilautomatischer Werkzeugwechsel durchgeführt werden kann.

Ferner weist die Bearbeitungsvorrichtung 10 einen Manipulator 12 auf. Der Manipulator weist einen Stützrahmen 12.1 und eine am Stützrahmen verlagerbar angeordnete Portaleinrichtung 12.2 auf. Die Portaleinrichtung 12.2 umfasst einen Greifer 12.3 mit einer oberen Greifbacke 12.4 und einer unteren Greifbacke 12.5. Im Ausführungsbeispiel nach Fig. 6 sind an der Portaleinrichtung 12.2 eine Mehrzahl von Greifern 12.3 vorgesehen. Der Manipulator 12 ist derart eingerichtet, ein Werkstück 2 vom Zuführtisch 13 aufzunehmen und der ersten Spannvorrichtung 1 zuzuführen. Des Weiteren ist der Manipulator 12 eingerichtet, ein bereits einseitig bearbeitetes Werkstück 2 aus der ersten Spannvorrichtung 1 zu entnehmen und entweder dem Zuführtisch 13, der Puffereinrichtung des Zuführtisches, einer zweiten nicht dargestellten Spannvorrichtung oder der ersten Spannvorrichtung 1 derart zuzuführen, dass eine weitere Seite des Werkstücks 2 bearbeitet werden kann. In einer nicht dargestellten Variante kann der Manipulator als Knickarmroboter ausgeführt sein, wobei der Knickarmroboter die Werkstücke mit einer Saug- und/oder Greifeinrichtung manipulieren kann.

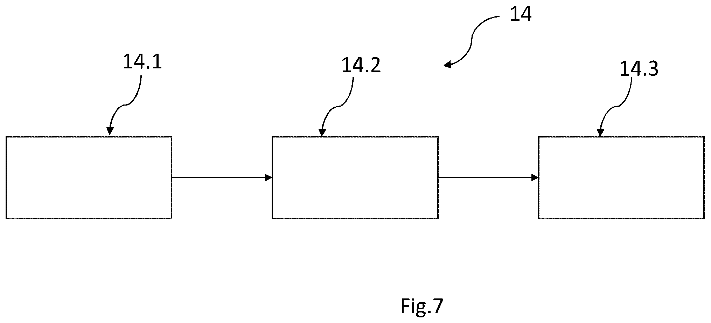

Mit Hilfe der Bearbeitungsvorrichtung 10 können mehrere Seiten eines Werkstücks 2 bearbeitet werden. Hierfür wird, wie im Fließbildschemata nach Fig. 7 das Werkstück 2 in eine erste Spannvorrichtung 1 eingeführt. Das Einführen 14.1 wird im vorliegenden Ausführungsbeispiel nach Fig. 6 mit Hilfe des Manipulators 12 durchgeführt. In einer alternativen, nicht dargestellten Ausgestaltung kann das Einführen auch manuell durch einen Werker erfolgen. Nach dem Einführen 14.1 wird das Werkstück 2 in der ersten Spannvorrichtung 1 ausgerichtet. Zum Positionieren 14.2 wird das Werkstück 2 gegen das erste Spannbackenführungselement 1.4 bewegt. Das Positionieren 14.2 kann zudem durch ein nicht dargestelltes erstes Anschlagselement, wie beispielsweise mit dem Bezugszeichen 5 in Fig. 3 ersichtlich, unterstützt werden. Hierdurch kann besonders bei bereits vorkonturierten Werkstücken ein ordnungsgemäßes Positionieren in der ersten Spannvorrichtung 1 sichergestellt werden. Nach dem Positionieren 14.2 des Werkstücks 2 in die Spannvorrichtung 1 wird die obere und/oder untere Spannbacke 1.2, 1.3 derart zueinander verlagert, dass das Werkstück 2 fixiert wird. Das Fixieren 14.3 kann hierbei über eine nicht dargestellte Steuerungseinheit angesteuert werden. Vorzugsweise wird nach dem Fixieren 14.3 das Werkstück 2 einer Bearbeitungseinheit 11 zugeführt. Durch das ordnungsgemäße Positionieren 14.2 und das sichere Fixieren 14.3 kann eine präzise Bearbeitung des Werkstücks 2 sichergestellt werden.

### BEZUGSZEICHENLISTE

1 erste Spannvorrichtung
1.1 erste Spannzange
1.2 obere Spannbacke
1.3 untere Spannbacke
1.4 erste Spannbackenführungselement
2 Werkstück
2.1 Oberfläche der Kontur des Werkstücks
2.2 Fortsatz
3 erster Tisch
4 zweite Spannvorrichtung
4.1 zweite Spannzange
4.2 zweite obere Spannbacke
4.3 zweite untere Spannbacke
4.4 zweite Spannbackenführungselement
5 Erster Anschlagelement
5.1 Anlegearm
5.2 Verlagerungsarm
5.3 elastisches Material
5.4 Anlegefläche
6 Andrückelement
7 Ruheposition
8 Arbeitsposition
9 feststehende Führungseinheit
10 Bearbeitungsvorrichtung
11 Bearbeitungseinheit
11.1 Bearbeitungsportal
11.2 Werkzeugführung/Schiene
11.3 Werkzeug
12 Manipulator
12.1 Stützrahmen
12.2 Portaleinrichtung
12.3 Greifer
12.4 obere Greifbacke
12.5 untere Greifbacke
13 Zuführtisch
13.1 Auflagefläche
13.2 Tragrahmen
14 Fixierverfahren
14.1 Einführen
14.2 Positionieren
14.3 Fixieren

## Patentansprüche

1. Ausrichteinrichtung zum ordnungsgemäßen Positionieren eines Werkstücks (2), insbesondere eines Werkstücks (2) aus Holz, Holzwerkstoffen, Kunststoffen oder dergleichen, umfassend eine Auflagefläche für das Werkstück (2) und ein erstes Anschlagselement (5), wobei das erste Anschlagselement (5) zumindest abschnittsweise an einer lateralen Oberfläche einer Kontur (2.1), insbesondere an einer Oberfläche einer bereits bearbeiteten Kontur (2.1), des Werkstücks (2) anliegt.

2. Ausrichteinrichtung nach Anspruch 1, wobei das erste Anschlagselement (5) verlagerbar angeordnet ist, wobei das erste Anschlagselement (5) eine Ruhe- und eine Arbeitsposition aufweist, wobei das erste Anschlagselement (5) in der Arbeitsposition oberhalb der Ebene der Auflagefläche angeordnet ist.

3. Ausrichteinrichtung nach Anspruch 2, wobei die Ruheposition unterhalb der Ebene der Auflagefläche angeordnet ist, wobei eine Antriebseinheit zur Verlagerung des ersten Anschlagselements (5) vorgesehen ist, wobei die Antriebseinheit zumindest teilweise unterhalb der Ebene der Auflagefläche angeordnet ist.

4. Ausrichteinrichtung nach einem der vorherigen Ansprüche, wobei das erste Anschlagselement (5) einen Verlagerungsarm (5.2) und einen am Verlagerungsarm angeordneten Anlegearm (5.1) aufweist, wobei der Anlegearm (5.1) an die Kontur (2.1) des Werkstücks (2) anlegbar ist.

5. Ausrichteinrichtung nach Anspruch 4, wobei der Anlegearm (5.1), vorzugsweise in einer vertikal ausgerichteten Hochachse, am Verlagerungsarm (5.2) verlagerbar ist, wobei der Anlegearm (5.1) entsprechend der Kontur (2.1) des Werkstücks (2) derart am Verlagerungsarm (5.2) verlagerbar ist, dass der Anlegearm (5.1) zumindest abschnittsweise an einer Oberfläche der Kontur (2.1) des Werkstücks (2) anliegt.

6. Ausrichteinrichtung nach Anspruch 4 oder 5, wobei der Anlegearm (5.1) austauschbar am Verlagerungsarm (5.2) angeordnet ist, wobei eine Seite des austauschbaren Anlegearms (5.1) eine Gegenkontur aufweist, wobei die Gegenkontur zumindest abschnittsweise wenigstens annähernd der Kontur (2.1) des Werkstücks (2) entspricht.

7. Ausrichteinrichtung nach einem der vorherigen Ansprüche, wobei die Ausrichteinrichtung mindestens ein weiteres Anschlagselement aufweist, wobei das weitere Anschlagselement im Bereich des ersten Anschlagelements (5) angeordnet ist und ebenfalls eine Ruheposition und eine Arbeitsposition aufweist, wobei das erste und das weitere Anschlagselement separat voneinander verlagerbar sind.

8. Ausrichteinrichtung nach Anspruch 7, wobei das erste und/oder das weitere Anschlagselement (5) derart verlagerbar sind, dass das erste Anschlagselement (5) zumindest abschnittsweise an der Oberfläche einer ersten Kontur (2.1) des Werkstück (2) anlegbar ist und/oder dass das weitere Anschlagselement zumindest abschnittsweise an einer Oberfläche einer zweiten Kontur des Werkstücks (2) anlegbar ist.

9. Ausrichteinrichtung nach einem der vorherigen Ansprüche, wobei das erste und/oder ein weiteres Anschlagselement (5) zumindest abschnittsweise aus einem elastischen Material (5.3), vorzugsweise einem elastischen Kunststoff, besteht, wobei die Ausrichteinrichtung (1) ein Andrückelement (6) aufweist, wobei das Andrückelement (6) das Werkstück (2) gegen das erste und/oder weitere Anschlagselement (5) bewegt, wobei sich das elastische Material (5.3) des ersten und/oder weiteren Anschlagselements (5) an die Kontur (2.1) des Werkstücks (2) anpasst, wenn das Andrückelement (6) das Werkstück (2) gegen das erste und/oder weitere Anschlagselement (5) bewegt.

10. Ausrichteinrichtung nach Anspruch 9, wobei das elastischen Material (5.3) einen Hohlraum aufweist, wobei der Hohlraum durch ein Fluid, vorzugsweise Druckluft, beaufschlagbar ist, wodurch das elastische Material (5.3) derart verformbar ist, dass es sich wenigstens abschnittsweise an die Kontur des Werkstück (2) anlegt.

11. Ausrichteinrichtung nach einem der vorherigen Ansprüche, wobei die Ausrichteinrichtung Teil einer Spannvorrichtung, eines Manipulators und/oder eines Zuführtisches einer Bearbeitungsvorrichtung ist.

12. Spannvorrichtung zum Fixieren eines Werkstücks (2), insbesondere eines Werkstücks (2) aus Holz, Holzwerkstoffen, Kunststoffen oder dergleichen, aufweisend mindestens eine erste Spannzange (1.1), wobei die erste Spannzange (1.1) eine obere Spannbacke (1.2) und eine untere Spannbacke (1.3) umfasst, wobei die obere und untere Spannbacke (1.2, 1.3) derart zueinander verlagerbar sind, dass ein Werkstück (2) zwischen der oberen und unteren Spannbacke (1.2, 1.3) für eine Bearbeitung, insbesondere eine spanende Bearbeitung, fixierbar ist, wobei die Spannvorrichtung ferner eine Ausrichteinrichtung, insbesondere eine Ausrichteinrichtung nach einem der Ansprüche 1 bis 11, zum Positionieren des Werkstücks in der Spannvorrichtung aufweist.

13. Spannvorrichtung nach Anspruch 12, wobei das erste Anschlagselement (5) im Bereich der ersten Spannzange (1.1), insbesondere in der Draufsicht auf die erste Spannzange (1.1) seitlich versetzt zur oberen und/oder unteren Spannbacke (1.2, 1.3) und/oder seitlich versetzt zum Werkstückmittelpunkt, angeordnet ist.

14. Spannvorrichtung nach Anspruch 12 oder 13, wobei die untere und/oder obere Spannbacke (1.2, 1.3) eine Aussparung aufweisen, wobei die Aussparung derart ausgestaltet ist, dass das erste Anschlagselement (5) durch die Aussparung in die Arbeitsposition verlagerbar ist.

15. Bearbeitungsvorrichtung, insbesondere zum Bearbeiten von Werkstücken (2) aus Holz, Holzwerkstoffen, Kunststoffen oder dergleichen, mit einem Zuführtisch (13), zumindest einer ersten Spannvorrichtung (1), insbesondere einer Spannvorrichtung nach den Ansprüchen 12 bis 14, einer Bearbeitungseinheit (11), insbesondere einer zerspanenden Bearbeitungseinheit (11) und einer Ausrichteinrichtung, insbesondere eine Ausrichteinrichtung nach einem der Ansprüche 1 bis 11, wobei die erste Spannvorrichtung (1) an einem verlagerbaren ersten Tisch (3) angeordnet ist, wobei der erste Tisch (3) für eine Bearbeitung eines Werkstücks (2) relativ zur Bearbeitungseinheit (11) verlagerbar ist.

16. Bearbeitungsvorrichtung nach Anspruch 15, wobei die Bearbeitungsvorrichtung (10) einen Manipulator (12) aufweist, wobei die Ausrichteinrichtung am Zuführtisch angeordnet ist, wobei an der Ausrichteinrichtung ein Werkstück positionierbar ist, wobei der Manipulator das ausgerichtete Werkstück entnimmt und ausgerichtet in die erste Spannvorrichtung (1) bewegt.

17. Bearbeitungsvorrichtung nach Anspruch 15 oder 16, wobei die Bearbeitungsvorrichtung eine Sensoreinheit aufweist, wobei die Sensoreinheit die Längen-, Breiten- und/oder Höhenerstreckung eines auf dem Zuführtisch liegenden Werkstücks ermittelt und die ermittelten Werte einer Steuerungseinheit bereitstellt, wobei die Steuerungseinheit die Ausrichteinrichtung, den Manipulator (12) und/oder die erste Spannvorrichtung (1) ansteuert.

18. Bearbeitungsvorrichtung nach einem der Ansprüche 15 bis 17, wobei die Bearbeitungsvorrichtung (10) eine zweite Spannvorrichtung (4) aufweist, wobei die zweite Spannvorrichtung (4) an einem zweiten Tisch angeordnet ist, wobei der zweite Tisch relativ zur Bearbeitungseinheit (11) und relativ zum ersten Tisch (3) verlagerbar ist, wobei die Bearbeitungseinheit (11) einen Bearbeitungsbereich aufweist, wobei der erste und/oder der zweite Tisch (3) für eine Bearbeitung eines Werkstücks (2) in den Bearbeitungsbereich verlagerbar ist, wobei ferner ein Werkstück (2) von der ersten Spannvorrichtung (1) zur zweiten Spannvorrichtung (4) umspannbar ist, wobei die erste Spannvorrichtung (1) und die zweite Spannvorrichtung (4) für ein Umspannen in eine Umspannposition fahren, wobei die Umspannposition zumindest teilweise außerhalb des Bearbeitungsbereichs ist.

19. Verfahren zum Fixieren eines Werkstücks (2), insbesondere eines Werkstücks (2) mit einer bereits bearbeiteten Seitenfläche aufweisend eine Kontur (2.1), in einer ersten Spannvorrichtung (1), insbesondere einer Spannvorrichtung nach einem der Ansprüche 12 bis 14, umfassend folgende Schritte:
Einführen (14.1) eines Werkstücks (2) in die erste Spannvorrichtung (1),
Fixieren (14.3) des Werkstücks (2) durch die erste Spannvorrichtung (1), vorzugsweise durch zumindest eine obere und/oder untere Spannbacke (1.2, 1.3) einer ersten Spannzange (1.1) der ersten Spannvorrichtung (1), wobei das Werkstück (2) vor oder nach dem Einführen (14.1) in einer Ausrichteinrichtung ausgerichtet wird.

20. Verfahren nach Anspruch 19, wobei die Ausrichteinrichtung ein verlagerbares und/oder austauschbares Anschlagselement (5) aufweist, wobei das erste Anschlagselement (5) Teil eines Zuführtisches einer Bearbeitungsmaschine und/oder Teil der ersten Spannvorrichtung ist.

21. Verfahren nach Anspruch 20, wobei das erste Anschlagselement (5) mit Hilfe einer Antriebseinheit von einer Ruheposition in eine Arbeitsposition verlagerbar ist, wobei eine Steuerungseinheit vorgesehen ist, wobei die Steuerungseinheit derart eingerichtet ist, die Antriebseinheit in Abhängigkeit einer Information des Werkstücks (2) anzusteuern, wobei die Antriebseinheit von der Steuereinheit derart angesteuert wird, dass in Abhängigkeit der Informationen, insbesondere die Kontur (2.1) der Oberfläche, des zu spannenden Werkstück (2), das erste Anschlagselement (5) von der Ruheposition in eine Arbeitsposition derart verlagert wird, dass das erste Anschlagselement (5) zumindest abschnittsweise an einer Oberfläche der Kontur (2.1) des Werkstücks (2) anliegt.

22. Verfahren nach einem der Ansprüche 19 bis 21, wobei mindestens ein weiteres Anschlagselement vorgesehen ist, wobei die Antriebseinheit derart von der Steuereinheit angesteuert wird, dass das erste und das weitere Anschlagselement (5) von einer Ruheposition in eine Arbeitsposition verlagert werden, wobei das weitere Anschlagselement zumindest annähernd zeitgleich von einer Ruheposition in eine Arbeitsposition verlagert wird, wobei die Lage der Arbeitsposition des ersten Anschlagselements (5) sich von der Lage der Arbeitsposition des weiteren Anschlagselements unterscheidet.

23. Verfahren nach einem der Ansprüche 19 bis 22, wobei das Einführen (14.1) mit Hilfe eines Manipulators erfolgt, wobei der Manipulator ein Anschlagselement (5) aufweist, wobei das Werkstück am Anschlagselement derart ausgerichtet wird, dass es ausgerichtet in die Spannvorrichtung eingeführt wird.
